Europäisches Patentamt

European Patent Office

Office européen des brevets

(11) Publication number: **0 274 724**
**A2**

(12) **EUROPEAN PATENT APPLICATION**

(21) Application number: **87119002.1**

(22) Date of filing: **22.12.87**

(51) Int. Cl.⁴: **B01F 17/00 , A01N 25/30**

(30) Priority: **02.01.87 US 8**

(43) Date of publication of application:
**20.07.88 Bulletin 88/29**

(84) Designated Contracting States:
**AT BE CH DE FR GB IT LI NL**

(71) Applicant: **BASF Corporation**
**9 Campus Drive**
**Parsippany, NJ 07054(US)**

(72) Inventor: **Mente, Donald Charles**
**8759 Parkway**
**Grosse Ile Michigan 48138(US)**

(74) Representative: **Wurzler, Hartmut, Dr. et al**
**i.Fa. BASF Aktiengesellschaft**
**Carl-Bosch-Strasse 38**
**D-6700 Ludwigshafen(DE)**

(54) Liquefied normally solid polyoxyalkylene copolymers.

㉗ Liquid compositions, useful in pesticide concentrates, prepared by dissolving a normally solid ester of a polyoxyalkylene block or heteric copolymer anionic surface-active agent in at least one solvent with or without water. As used herein, the expression "normally solid" includes the pasty and waxy forms. It has been found also in accordance with the instant invention that these normally solid anionic esters of polyoxyalkylene copolymers dissolve readily in the solvent when the molten ester is added to the heated solvent.

EP 0 274 724 A2

## LIQUEFIED NORMALLY SOLID POLYOXYALKYLENE COPOLYMERS

This invention relates to liquefied normally solid forms of esters of polyoxyalkylene copolymers. The compositions produced by the method of this invention are particularly useful in flowable pesticide concentrates.

Pesticidally-active compounds have conventionally been formulated as emulsifiable concentrates or as wettable powders. The emulsifiable concentrates have normally been the type of formulation preferred for pesticides which are soluble in organic solvents. Pesticides with limited solvent solubility have usually been formulated as wettable powders. Both of these formulation types present their own special problems.

Emulsifiable concentrates are based on one of our diminishing natural resources - petroleum. Because large amounts of solvents are required, emulsifiable concentrates can only become more expensive as time goes on. In addition to the economic considerations, it is becoming increasingly apparent that conservation of this valuable resource is imperative.

Wettable powders are dusty and breathing the dust can cause skin and eye irritation as well as illness. Disposal of the residue-containing bag is also of growing concern, because children and those unfamiliar with the potential hazards might be exposed when the bag is discarded.

As a result of these problems, flowable formulations are becoming increasingly more prevalent. They are prepared by dispersing the finely divided pesticide ingredients in an aqueous medium to form a concentrated dispersion. For application, this dispersion is further diluted with water. Flowable formulations provide the following advantages: little or no organic solvent required, virtual elimination of inhalation danger, and greatly reduced skin and eye irritation problems. In addition, container residues can easily be hosed into the spray tank prior to disposing the container.

The applications of polyoxyalkylene copolymers, especially polyols containing high amounts of ethylene oxide, have been widely recognized and used as effective emulsifiers for pesticide concentrates. Because of their high ethylene oxide contents, these polyols are either paste or solid products, making their uses in formulating agricultural products cumbersome and very difficult, due to gel formation upon addition of water.

Accordingly, it is a purpose of the instant invention to provide liquid compositions useful in pesticide concentrates which are readily pumpable at temperatures below 50°C and particularly at or about room temperature, and which are non-gelling.

U.S. Patents 4,351,753: 4,434,077; and 4,434,078 all disclose normally solid polyether polyols dissolved in solvents, particularly ethylene glycol and alkylene gylcols having 3 to 5 carbon atoms with or without water. These normally solid polymers are nonionic surfactants and are polyether polyols.

U.S. Patent 3,969,134 discloses dissolving polyoxyethylene-polyoxypropylene copolymers in solvents such as the various alcohols, i.e. ethanol, propanol, isopropanol, ethylene gylcol, propylene glycol, etc. The polyoxyalkylene copolymers all are prepared using an initiator which has a secondary alkanol having a linear alkane chain of from 10 to 20 carbon atoms. These copolymers are all nonionic surfactants.

U.S. Patent 4,289,581 discloses a liquid composition prepared from a normally solid polyoxyalkylene polyether nonionic surfactant by dissolving in a solvent which may be one of many solvents including dimethylformamide. As with the other references, the surfactant is a nonionic and is a polyether.

U.S. Patent 4,089,814 discloses a roll-on perfume composition which includes a polyoxyethylene-polyoxypropylene block copolymer and propylene glycol along with other important components necessary to a roll-on perfume composition.

U.S. Patent 2,602,780 discloses a hydraulic fluid containing a heteric polyoxyalkylene thickener and ethylene glycol.

U.S. Patent 4,324,781 discloses a pesticidally active ingredient, which is normally solid, suspended in water in a finely dispersed state with a polyoxyethylene-polyoxypropylene block copolymer surfactant and a polyvinyl alcohol as dispersing agents in the presence of ethylene glycol and liquid paraffin.

U.S. Patent 4,043,752 discloses dye solutions containing two nonionic surfactants. More specifically, it discloses a dye coupling component dissolved in a mixture of ethylene glycol, N-butanol, a nonionic polyoxyethylene-polyoxypropylene oxide copolymer surfactant, and a nonionic polyethoxylated allaphatic amine surfactant.

U.S. Patent 4,273,884 discloses an emulsion of a high molelcular weight polyol for preparing polyurethanes and ethylene glycol or 1,4-butanediol useful as chain extenders. This composition uses as an emulsifier an ethylene oxide/propylene oxide block copolymer diol having an average molecular weight of above about 12,000 and an ethylene oxide content of about 70 percent to about 90 percent in amount effective to form a stable emulsion. This is a three component mixture which includes, in addition to the ethylene oxide/propylene oxide block copolymer and ethylene glycol a high molecular weight polyurethane polyol which is a major component of the composition.

Czechoslovakian Patent 190,210 discloses an emulsifier for preparing aqueous herbicide suspensions which consists of an ethylene oxide/propylene oxide copolymer and nonionogenic surfactants based on ethylene oxide adducts of higher fatty alcohols, acids, alkylphenols, and/or iogenic surfactants which compositions also contain ethylene glycol.

Russian Patent 380,681 relates to a paste for polishing and honing of metal and their alloys which comprises abrasives, stearin, a block copolymer of propylene and ethylene oxides and highly dispersed powder of fusible alloy. The composition also includes ethylene glycol.

U.S. Patent 3,630,973 discloses the addition of small amounts of low molecular weight glycols to highly viscous polyether polyols to provide polyol blends having reduced viscosities and improved handling characteristics. Polyurethane foams having desirable physical properties can be prepared from these polyol blends.

In accordance with the instant invention, it has been discovered that the above objects may be achieved by liquid compositions, useful in pesticide concentrates, prepared by dissolving an anionic surfactant which is a normally solid ester of a polyoxyalkylene block or heteric copolymer in at least one solvent with or without water. As used herein, the expression "normally solid" includes the pasty and waxy forms. It has been found also in accordance with the instant invention that these normally solid <u>anionic</u> esters of polyoxyalkylene copolymers dissolve readily in the solvent when the molten ester is added to the heated solvent.

The emulsifier of the instant invention comprises from about 0.5 to 65 percent by weight normally solid anionic ester of a polyoxyalkylene copolymer, 10 to 75 percent by weight solvent and 0 to 75 percent by weight of water. The preferred composition comprises from about 25 to 35 percent by weight polyoxyalkylene copolymer, 25 to 75 percent by weight of the solvent and 0 to 50 percent by weight water.

The esters of the polyoxyalkylene copolymers are preferably phosphate, sulfate, sulfonate and carboxylate esters and may be prepared by reacting a phosphonating material such as polyphosphoric acid, where a phosphate ester is desired, with the polyoxyalkylene copolymer. Similarly, the other esters may be prepared by reacting sulfating, sulfonating, or carboxylating materials as the case may be, with the polyoxyalkylene copolymer. Methods for such reactions are well known to those skilled in the art. In all cases, the ester may be used in the <u>acid</u> <u>form</u> <u>or</u> <u>neutralized</u> <u>before</u> use. A preferred neutralizer is triethanolamine. Other suitable neutralizers are alkaline hydroxides such as sodium hydroxide and potassium hydroxide, alkaline earth hydroxides such as calcium hydroxide and magnesium hydroxide, morpholine and other organic amines and aqueous ammonia. As used herein throughout the application, the expression "ester of a polyoxyalkylene copolymer" includes neutralized esters.

The liquid composition of the instant invention is prepared by heating the solvent and water mixture, where water is employed, preferably to a temperature of at least about 40°C and most preferably a temperature of at least 50°C. The ester of the polyoxyalkylene copolymer is heated separately until molten and then mixed with the heated solvent. Since different compounds of this type have different melting points, the minimum temperature would vary with the ester employed. In the case of most esters of the polyoxyalkylene copolymers in accordance with this invention, the minimum temperature would be about 45°C. Theoretically the temperature of the solvent and water mixture, where water is employed, could be anything above room temperature or even room temperature. However, the time required to dissolve the ester would be excessively long at such temperatures. Accordingly, as stated above, it is preferable to heat the solvent or solvent-water mixture to a temperature of at least about 40°C.

Suitable polyoxyalkylene copolymers are cogeneric mixtures of conjugated polyoxyalkylene compounds containing in their structure the residue of an active hydrogen containing compound having from 1 to 6 carbon atoms and at least one hydrophobic oxyalkylene chain in which the oxygen/carbon atom ratio does not exceed 0.40 and at least one hydrophilic oxyalkylene chain in which the oxygen/carbon atom ratio is greater than 0.40.

Polymers of oxyalkylene groups obtained from propylene oxide, butylene oxide, amylene oxide, styrene oxide, mixtures of such oxyalkylene groups with each other and with minor amounts of polyoxyalkylene groups obtained from ethylene oxide, butadiene dioxide, and glycidol are illustrative of hydrophobic oxyalkylene chains having an oxygen/carbon atom ratio not exceeding 0.40. Polymers of oxyalkylene groups obtained from ethylene oxide, butadiene dioxide, glycidol, mixtures of such oxyalkylene groups with each other and with minor amounts of oxyalkylene groups obtained from propylene oxide, butylene oxide, amylene oxide and styrene oxide are illustrative of hydrophilic oxyalkylene chains having an oxygen/carbon ratio greater than 0.40.

Among the conjugated polyoxyalkylene compounds which can be used in the compositions of the invention are those which correspond to the formula:

$Y[(C_3H_6O)_n(C_2H_4O)_mH]_x$

wherein Y is the residue of an organic compound having from about 1 to 6 carbon atoms and containing x reactive hydrogen atoms in which x has a value of at least one, m has a value such that the oxyethylene content of the molecule is from about 20 to 90 weight percent and n has a value such that the total molecular weight of the polyoxypropylene groups is from about 1000 to 7500. Compositions of this type are more particularly described in U.S. Patents Nos. 2,674,619 and 2,677,700.

Other suitable nonionic block copolymers correspond to the formula:

$Y[(C_2H_4O)_m(C_3H_6O)_nH]_x$

wherein Y, n, m and x have values as set forth above. Compositions of this type are more particularly described in U.S. Patent No. 3,036,118. In either of the above formulas, compounds falling within the scope of the definition for Y include, for example, methanol, ethanol, propylene glycol, ethylene glycol, diethylene glycol, glycerine, pentaerythritol, trimethylolpropane, ethylene diamine and the like. Also, the oxypropylene chains optionally, but advantageously, contain small amount of ethylene oxide and the oxyethylene chains also optionally, but advantageously, contain small amounts of alkylene oxides such as propylene oxide and butylene oxide.

Preferred compounds of the types of the two above formulas are those wherein Y is the residue of propylene glycol or ethylene glycol, n has a value such that the total molecular weight of the polyoxypropylene groups is about 1000 to 4000, m is as set forth above, and x is 2. In all cases, the compounds of this invention are those which are normally solid as defined above.

Other suitable nonionic surface-active block copolymers are those where Y, in the above formulas, is the residue of a nitrogen-containing reactive hydrogen compound having 1 to 6 carbon atoms per molecule and most preferably where Y is the residue of ethylene diamine and x is 4. Such compounds contain adjoined to the nitrogens of the ethylene diamine, oxypropylene units and oxyethylene units. The oxypropylene units may be adjoined to the nitrogens of the ethylene diamine and outboard of said oxypropylene units are oxyethylene units. Products of this type are described in U.S. Patent No. 2,979,528. As with the formulas set forth above, the oxyethylene units can be adjoined to the nitrogens with the oxypropylene units outboard of said oxyethylene units as per U.S. Patent 3,036,118. In either case, the oxypropylene units would preferably have a molecular weight of 3000 to 7500 and the oxyethylene units would range from approximately 20 to 90 weight percent of the compound.

Suitable heteric nonionic copolymers include a mixture of conjugated polyoxyalkylene compounds consisting of the nucleus of an organic reactive hydrogen compound having from 1 to 6 reactive atoms, at least one heteric hydrophobic polyoxyalkylene chain having an average oxygen/carbon atom ratio of less than 0.5, said hydrophobic polyoxyalkylene chain consisting of polymers of oxyalkylene groups selected from the group consisting of oxypropylene, oxybutylene, oxyamylene, oxystyrene, mixtures of said oxylakylene groups with each other and mixtures of said oxyalkylene groups with oxyethylene groups, and at least one heteric hydrophilic polyoxyethylene chain consisting essentially of 95 to 40 weight percent of oxyethylene groups and 5 to 60 weight percent of higher molecular weight oxyalkylene groups selected from the group consisting of oxypropylene, oxybutylene, oxystyrene, and mixtures thereof, said heteric hydrophilic polyoxyethylene chain having an average oxygen/carbon atom ratio of greater than 0.4, and wherein the average molecular weight of said mixture of polyoxyalkylene compounds ranges from about 1,000 to 30,000 and the total oxyethylene content ranges from about 5 to 90 percent by weight of said surface-active mixture.

Suitable organic reactive hydrogen compounds having from 1 to 6 reactive hydrogen atoms include mono-and polyhydric alkanols having up to 6 carbon atoms per molecule; alkyl ethers of alkanols having up to 6 carbon atoms per molecule, primary alkylamines having up to 6 carbon atoms per molecule, secondary dialkylamines having up to 60 carbon atoms per molecule, alkylene polyamines having up to 6 carbon atoms per molecule, piperazine, carbon-substituted methylpiperazines, alkane amides having up to 6 carbon atoms per molecule, N-alkyl alkane amides having up to 6 carbon atoms per molecule, benzenesulfonamide, N-ethylbenzenesulfonamide, N-propylethane-sulfonamide, and mono-and polycarboxylic alkanoic acids having up to 6 carbon atoms per molecule.

In general, each of said hydrophobic chains is attached at one end thereof to one end of one of said hydrophilic chains and the so-formed hydrophobic-hydrophilic chains are attached at one end thereof to the nucleus of said reactive hydrogen compound at the site of each of its reactive hydrogen atoms.

Also, it is preferred that the hydrophobic chain have a theoretical molecular weight of about 500 to 5,000 and the hydrophilic chain have a theoretical molecular weight of about 500 to 1,000.

Suitable solvents include alcohols such as i-propanol, n-butanol, ethylene glycol, propylene glycol and the butylene glycols and amylene glycols. Other solvents include cyclohexanone, dimethyl formamide and butyrolactone.

The invention is illustrated by the following specific examples, which are to be taken as illustrative and not in a limiting sense. In the example, parts are by weight, and temperatures are in degrees centigrade, unless otherwise specifically indicated.

The Brookfield viscosity for the examples below was determined as follows:

The Brookfield viscometer rotates a spindle in the liquid and measures the torque necessary to overcome the resistance to the induced movement at a specific temperature. More specifically, the sample to be tested is placed in a 250 milliliter beaker. The sample should be obtained in the sample container used for the test to avoid any necessity for mixing the sample before testing and reducing the possibility of air bubble inclusion and then is allowed to stand until any occluded air bubbles have disappeared. The sample and container are then placed in a water bath which is maintained at a constant temperature of 20°C +0.1°C in such a manner than the sample level is below the level of the bath. The preferred spindle, which is spindle No. 2 for the following example is attached to a Brookfield viscometer, Model LVF. This is a well-known device to those skilled in the art and is readily available on the market. The spindle is inserted into the sample and the viscometer is allowed to run at the specified speeds, i.e. 6, 12, 30 and 60 RPM, for 10 to 20 turns and then stopped and the viscosity recorded.

The weight percent suspensibilities were determined by the standard WHO method. The samples were diluted in 34, 342, and 1000 ppm hardness water. The suspensibilities were measured after a two hour test period.

The zeta potentials were measured after the suspensions had been aged over night using a PenKem™ Laser Z meter sold by the PenKem Company. The formulations were prepared using Wyandotte, Michigan, tap water having 200 ppm hardness. The samples for zeta potential measurments were prepared by diluting two drops of stock (concentrated) suspension with 150.0 grams of WHO standard hardness water. WHO standard 34, 342, and 1000 ppm hardness water were used in the test.

The pour-out residues were determined by storing the samples in sealed 4 oz. glass bottles at ambient temperature for 30 days and the inverting the bottle completely for pour-out. The weight percent hold-up in the bottle after a 30 second pour-out period was then determined.

In the compositions of the Examples, ATRAZINE is a well-known herbicide sold by many manufacturers.

The F.G. 10 silicone defoamer is a well-known defoamer sold by the Dow Corning Company.

The surfactants indicated in the table below are as follows:

Nonionic No. 1 defines a block copolymer which is the polyoxyethylene adduct of a polyoxypropylene hydrophobic base, i.e., comprises polyoxyethylene groups at both ends of a polyoxypropylene base. The molecular weight of the hydrophobic base is about 3250 and the oxyethylene content is about 30 weight percent of the molecule.

Nonionic No. 2 defines a similar polyoxyethylene adduct of a polyoxypropylene hydrophobic base having a molecular weight of the hydrophobic base of about 3250 wherein the oxyethylene content is about 40 weight percent of the molecule.

Nonionic No. 3 defines a similar polyoxyethylene adduct of a polyoxypropylene hydrophobic base having a molecular weight of the hydrophobic base of about 3250 wherein the oxyethylene content is about 80 weight percent of the molecule.

Phosphate esters were prepared from each of the above nonionics, the resulting compound being an anionic surfactant. These were prepared by reacting 1.7 moles of the above-identified nonionic per mole of polyphosphoric acid. The preparation of such phosphate esters is well known to those skilled in the art and, accordingly, need not be described in detail here. As previously stated, the phosphate esters in each case were neutralized to a pH of 6 to 7.5 using triethanolamine during the preparation of the three-component liquid surfactant composition of the instant invention prior to mixture with the other components of the herbicide.

Examples

Five herbicide compositions were prepared having the following basic composition, the only difference being in using a different surfactant in each one.

| Component | Wt % |
|---|---|
| ATRAZINE, tech | 45.0 |
| Water (deionized | 45.2 |
| Propylene Glycol | 6.0 |
| FG-10 Silicone Defoamer | 0.5 |
| Xanthan Gum | 0.2 |
| Formalin | 0.1 |
| Surfactant | 3.0 |
| | 100.0 |

All five formulations were prepared identically using an Attritor™ Model 01 mill, sold by Union Process Inc. In each case the surfactant was added as a liquid composition of the type of the instant invention. More specifically, these were prepared by adding 4.8 parts propylene glycol to a reactor equipped for heating, cooling and mixing. The glycol was agitated and heated to 50°C and controlled to ±5°C. The surfactant was heated to above its melting point and molten surfactant charged to the reactor, in the amount of 3 parts by weight with continued stirring. In stirring, the creation of a vortex was avoided since this tends to cause foaming. Agitation was continued until the mixture was uniform. Heating was then discontinued and city water at the temperature of the water line was added, and agitation continued until the product was uniform. The rate of agitation was such as to avoid foaming. While the total amount of water used to prepare the solubilized surfactant was 6.0 parts, a portion of the water was initially withheld and the solution was neutralized to a pH of 6 to 7.5 using triethanolamine. The rest of the water was then added taking into account the amount of triethanolamine added. This three-component liquid was then mixed with the other components of the above formulation in the Atritor Model 01. The total amounts of water and propylene glycol in the herbicide including the amounts originally present in the three-component liquid were the amounts shown above. When the composition containing nonionic No. 3 was prepared, a very foamy product was achieved which would not wet the ATRAZINE herbicide. Accordingly, since the product was completely unsatisfactory, it was not subjected to any of the tests set forth above. However, the phosphate ester of Nonionic #3 could be be processed into a flowable herbicide suspension which was subjected to the above tests.

The results of the above tests on the five herbicide compositions using the formulation set forth above with each of the five surfactants indicated in the table below are shown in said table.

## TABLE

### Surfactant

|  | Nonionic #1 | Nonionic #2 | Phosphate Ester of Nonionic #1 | Phosphate Ester of Nonionic #2 | Phosphate Ester of Nonionic #3 |
|---|---|---|---|---|---|
| **Brookfield Visc. @20°C** |  |  |  |  |  |
| 6 RPM | 2160 cps | 2580 cps | 2280 cps | 2760 cps | 3660 cps |
| 12 RPM | 1290 cps | 1540 cps | 1440 cps | 1540 cps | 2180 cps |
| 30 RPM | 748 cps | 808 cps | 744 cps | 816 cps | 1176 cps |
| 60 RPM | 450 cps | 516 cps | 456 cps | 526 cps | 756 cps |
| **Suspensibility (%)** |  |  |  |  |  |
| 34 PPM | 97.4% | 95.4% | 96.5% | 96.4% | 95.1% |
| 342 PPM | 93.3% | 90.7% | 96.1% | 96.1% | 93.5% |
| 1000 PPM | 90.0% | 87.8% | 94.8% | 92.5% | 92.8% |
| **ZETA Potential/ Specific Conductance** |  |  |  |  |  |
| 34 PPM | -12.8/ +.085 | -13.0/ +.087 | -34.8/ +.088 | -35.0/ +.087 | -15.2/ +.090 |
| 342 PPM | -6.1/ +.752 | -3.2/ +.759 | -20.8/ +.750 | -18.7 +.767 | -4.0/ +.748 |
| 1000 PPM | -3.3/ +2.1 | -1.7/ +2.2 | -10.7/ +2.1 | -10.0/ +2.2 | -1.7/ +2.2 |
| **30 Day Pour Out Residue (wt. %)** | 4.0 | 4.4 | 4.0 | 4.6 | 6.4 |

It should be noted that only 3 percent by weight of surfactant was included in each herbicide formulation in order to stress the system and help spot any differences in dispersant performance. Normally 5 weight percent would be incorporated in such formulations. The use of only 3 percent gave poor results with a spontaneity of bloom test on all five samples of the above table. Accordingly, such results are not shown in the table.

The resulting difference between the phosphate ester and the corresponding nonionic surfactant shows up in a difference of suspensibility and Zeta potential, particularly at 1000 ppm.

The weight percent suspensibility of the different formulations over a wide range of water hardnesses is important for agricultural chemical formulations. While suspensibility values over 80 weight percent are considered good, the higher the percent suspensibility, the better.

A significant improvement in suspensibility is shown in the above table. More specifically, the phosphate ester of nonionic No. 1 had almost 95 percent suspensibility compared to 90 percent for nonionic No. 1 and the phosphate ester of nonionic No. 2 was 92.5 percent as compared to 87.8 percent for Nonionic No. 2. It should also be noted that the suspensibility for phosphate ester No. 3 was also 92.8 percent. This cannot be compared with nonionic No. 3 by itself because a satisfactory formulation could not be made from nonionic No. 3 as explained above.

Zeta potential measurements provide insight into the adsorption of the various surfactants onto the surface of the herbicide particle. From the above direct comparisons it can seen that the zeta potential measurements were much lower for those compositions employing nonionic No. 1 and nonionic No. 2 than for the phosphate ester derivatives of each of these nonionic surfactants.

As can be seen from the above, the phosphate derivatives (triethanalamine salt) of the nonionic surfactants showed improved suspensibility and zeta potential in the above tests over the unmodified nomionic surfactants.

While there has been shown and described herein certain embodiments of the present invention, it is intended that there be covered as well any change or modification therein which may be made without departing from the spirit thereof.

## Claims

1. A liquid composition consisting essentially of a solvent and a normally solid anionic surfactant which surfactant is an ester of a polyoxyalkylene copolymer or heteric copolymer.

2. The liquid composition of claim 1 wherein said polyoxyalkylene copolymer is a cogeneric mixture of conjugated polyoxyalkylene compounds containing in their structure the residue of an active hydrogen-containing compound having from 1 to 6 carbon atoms and at least one hydrophobic oxyalkylene chain in which the oxygen/carbon atom ratio does not exceed 0.4 and at least one hydrophilic oxyalkylene chain in which the oxygen/carbon atom ratio is greater than 0.4

or

comprises a nucleus which is the residue of an organic compound having from about 1 to 6 carbon atoms and containing x reactive hydrogen atoms in which x has a value of at least 1 and wherein said hydrophobic oxyalkylene chain is primarily oxypropylene groups attached at one end thereof to said residue at the site of said active hydrogens and said hydrophilic oxyalkylene chain comprises primarily oxyethylene chain attached to said oxypropylene chains at the end of said oxypropylene chains opposite the end attached to said residue, said block copolymer comprising about 20 to 90 percent by weight oxyethylene groups and has a total molecular weight of about 1000 to 4000.

3. The liquid composition of claim 1 or 2 wherein the amount of said solvent is from about 10 to 75 percent by weight; the amount of said polyoxyalkylene copolymer is from about 0.5 to 65 percent by weight and from 0 to about 75 percent by weight of water.

4. The liquid composition of claim 1 to 3 wherein said ester is selected from the group consisting of phosphate, sulfate, sulfonate and carboxylate esters of said polyoxyalkylene copolymer and said solvent is selected from the group consisting of ethylene glycol, propylene glycol, isopropanol, N-butanol, cyclohexanone, dimethylformamide and butyrolactone.

5. The liquid composition of claim 1 to 4 wherein said ester is a neutralized ester.

6. The liquid composition of claim 1 to 5 wherein said anionic surfactant is a triethanolamine salt of said ester.

7. The liquid composition of claim 2 to 6 wherein said ester is the phosphate ester and said solvent is propylene glycol.

8. A method for preparing a liquid composition according to claim 1 to 7 suitable for use in flowable pesticides comprising heating the solvent, heating the normally solid anionic surfactant above its melting point and dissolving said molten normally solid anionic surfactant in said heated solvent.

9. The process of claim 8 wherein water is included in said mixture.